# EUROPEAN PATENT APPLICATION

(11) **EP 2 023 477 A1**
(43) Date of publication of application: **11.02.2009**
(21) Application number: 06756382.5
(22) Date of filing: 19.05.2006
(51) Int. Cl.: H02N 11/00

(54) **FIELD EMISSION POWER GENERATOR**

(71) Applicant: Akamatsu, Norio, Tokushima-shi Tokushima 770-0813 (JP)
(72) Inventor: Akamatsu, Norio, Tokushima-shi Tokushima 770-0813 (JP)
(74) Representative: Reinhard - Skuhra - Weise & Partner GbR
(86) International application number: PCT/JP2006/310026
(87) International publication number: WO 2007/135717

(57) **Abstract**

Stable generation of electricity can be achieved based on a new concept different from those of the conventional electricity generating methods, with a small external energy input, with high efficiency, and without apprehension of exhaustion, while paying due consideration to the environment.

The electricity generating apparatus comprises an electron supplier 20 possessing free electrons, an electron emitting port 30 provided electrically conductive with the electron supplier 20, an electron drawing electrode 40 provided opposite to the electron emitting port 30 via an electrical insulation space F for applying an electrical field to shift orbits of the electrons e attracted to the side of the electron emitting port 30 to the outer side where a less attractive force acts, an electron extracting electrode 50 for applying an electrical field to cause the electrons e placed under the reduced attractive force by the electron drawing electrode 40 to be emitted to the electrical insulation space F, and an electron collector 60 for receiving the emitted electrons e.

## Description

### Technical Field

The present invention relates to an electricity generating apparatus which utilizes field emission.

### Background Art

In electricity generation, as a method of attaining electrical energy, hydroelectricity and wind-powered generation have been known since a long time ago, and solar-powered and tidal-powered generations using natural energy are known as well. Further, thermal electricity generation using fossil fuels and nuclear electricity generation using nuclear energy are also known.
In the case of electricity generation using fossil fuels, there exists an imminent problem that fossil fuels of raw materials are a limited natural resource, so that they are going to be exhausted before long. Thus, it is impossible to meet the needs of the world over the long term.
Further, in the case of electricity generation using natural energy such as sunlight, wind power and the like, there is a drawback that it is not guaranteed that electricity can be surely supplied whenever we need, because natural energy such as sunlight and wind power is varied depending on the natural conditions.
Still further, in the case of nuclear electricity generation using nuclear energy, there is a big problem regarding safety and facilities.

On the other hand, the present inventor has provided a method of generating electricity by converting thermal energy into electrical energy, which is described in the following Patent Documents 1 through 4. In the method of generating electricity, sunlight is applied to a material and converted into thermal energy, thermal electrons are emitted from within the heated material, and thermal energy is converted into electrical energy by thermal electron emission.
Further, the following Patent Document 5 discloses an apparatus for converting thermal energy into electrical energy.
Still further, the following Patent Document 6 discloses an apparatus which adopts a method of emitting electrons by field effect.
Patent Document 1: Japanese Patent No. 3449623
Patent Document 2: Japanese Patent Laid-Open No. 2003-189646
Patent Document 3: Japanese Patent Laid-Open No. 2003-250285
Patent Document 4: Japanese Patent Laid-Open No. 2004-140288
Patent Document 5: Japanese Patent Laid-Open No. 2003-258326
Patent Document 6: Japanese Patent National Publication No. 11-510307

### Disclosure of the Invention

### Problems to be Solved by the Invention

The inventions disclosed in Patent Documents 1 through 4, however, all adopt a method of generating electricity by supplying thermal energy to a material, causing thermal electrons to be emitted from within the heated material, and collecting the emitted electrons. Specifically, these are electricity generating apparatuses of the type that convert externally provided thermal energy to electrical energy. To attain large electrical energy, correspondingly a large thermal energy input is required.
Patent Document 5 discloses a device and an apparatus utilizing field emission. However, the device and apparatus are nothing but a converter for converting thermal energy into electrical energy. In respect of generating electricity, they are limited to an electricity generator that adopts thermal electron emission by heating.
Patent Document 6 discloses a material and an apparatus for emitting electrons by field effect. However, disclosed therein are a discharging apparatus, an electron gun, and a display using emitted electrons themselves, which completely lack the technical idea of utilizing the field emission of electrons for generating electricity.

In view of the foregoing, an object of the present invention is to provide a novel electricity generating apparatus, based on a new concept entirely different from the concepts of the conventional electricity generating methods, which is capable of stably generating electricity with high efficiency, with a small external energy input, and without apprehension of exhaustion, while paying due consideration to the environment.

### Means for Solving the Problems

To achieve the above object, the present inventor has diligently carried out various kinds of experiments and examinations. As a result, he has acquired that novel electricity generation different from and more efficient than the electricity generation using thermal electron emission can be obtained by using a field emission phenomenon in which an electrical field acting on a material causes electrons in the material to be emitted from the surface thereof, and finally, he has achieved the present invention.
When an electrical field is concentrated on a small area of a material having a large amount of free electrons, for example, electrons are emitted from the surface of the material into a vacuum or the like. This phenomenon is known as field emission. In this case, the electrons are emitted by the electrical field without the need to apply thermal energy from the outside. By emitting the electrons efficiently due to the electrical field and collecting the emitted electrons successfully, the electrical energy by the electrons can be taken out to the outside.
As for the electrical field to be applied to the material, applying a plurality of electrodes properly makes it possible to reduce the loss of energy necessary for the electron emission and emit the electrons easily.
The material to be applied with the electrical field preferably holds a large amount of free electrons. Lowering the potential energy in its electron emission area can facilitate field emission.
As for the source of generating an electrical field, consumption of charges, i.e., energy consumption therein is theoretically negligible as long as it just applies the electrical field to the material and no current flows therein. In other words, as long as the electrons field-emitted from a material are prevented from reaching and being absorbed into the electrical field generating source, no energy would be consumed at the electrical field generating source. In the electrical field generating source for field-emitting electrons, by using at least two kinds of positive electrodes as the positive electrode, the electrons within the material can be field-emitted efficiently and external energy input can be reduced drastically.
As such, according to the present invention, the free electrons within the material are field-emitted efficiently and the field-emitted electrons are suitably collected and stored in an electron receiving material other than the electrical field generating source, to realize practicable electricity generation. At this time, energy consumption at the electrical field generating source that applies an electrical field to the electron emitting material is restricted to the minimum.

The field emission electricity generating apparatus according to the present invention has a first feature that it comprises an electron supplier made of a material possessing free electrons, an electron emitting port provided electrically conductive with the electron supplier, an electron drawing electrode provided opposite to the electron emitting port via an electrical insulation space for applying an electrical field to raise the energy level of electrons attracted to the side of the electron emitting port and shift their orbits to the outer side where a less attractive force acts, an electron extracting electrode provided separately from the electron drawing electrode for applying an electrical field to the electrons placed under the reduced attractive force by the electron drawing electrode to cause them to be extracted and emitted to an electrical insulation space from the electron emitting port, and an electron collector for collecting the electrons extracted and emitted due to the electron extracting electrode, and wherein applying a positive voltage to the electron drawing electrode and the electron extracting electrode causes the electrons to be field-emitted from the electron emitting port, and the field-emitted electrons are received and collected by the electron collector.
In addition to the first feature described above, the field emission electricity generating apparatus of the present invention has a second feature that the electron emitting port is made of a material and/or in a shape exhibiting a low potential barrier with respect to electron emission.
In addition to the first feature described above, the field emission electricity generating apparatus of the present invention has a third feature that the electron emitting port is formed by vertically planting a quasi-one-dimensional material on the surface of the electron supplier in such a manner that the longitudinal direction of the quasi-one-dimensional material corresponds to the direction of electron emission.
In addition to the third feature described above, the field emission electricity generating apparatus of the present invention has a fourth feature that the quasi-one-dimensional material is a carbon nanotube.
In addition to the first feature described above, the field emission electricity generating apparatus of the present invention has a fifth feature that the electron emitting port is made of a graphite, and the graphite surface is made so as to be a surface of the electron emitting port.
In addition to the first feature described above, the field emission electricity generating apparatus of the present invention has a sixth feature that the electron drawing electrode is formed by vertically planting a quasi-one-dimensional material on the surface thereof opposing to the electron emitting port in such a manner that the longitudinal direction of the quasi-one-dimensional material corresponds to the direction of electron emission.
In addition to the first feature described above, the field emission electricity generating apparatus of the present invention has a seventh feature that the electron extracting electrode is made of a quasi-two-dimensional material allowing the electrons emitted from the electron emitting port to pass therethrough due to the quantum tunneling phenomenon, and to be received by the electron collector provided at the back thereof.
In addition to the first feature described above, the field emission electricity generating apparatus of the present invention has a eighth feature that an electron orbit changing means is provided for changing orbits of the electrons emitted from the electron emitting port and moving towards the electron extracting electrode.
In addition to the first feature described above, the field emission electricity generating apparatus of the present invention has an ninth feature that a secondary emission preventing means is provided for preventing the electrons having reached the electron collector from being emitted secondarily.
In addition to the first feature described above, the field emission electricity generating apparatus of the present invention has a tenth feature that the electron collector and the electron supplier are electrically connected to each other, and an electrical load is provided between the electron collector and the electron supplier.

### Effects of the Invention

According to the field emission electricity generating apparatus recited in claim 1, when a positive voltage is applied to the electron drawing electrode, an electrical field is generated between the electron drawing electrode and the electron emitting port of the electron supplier, and increases the Coulomb force applied to free electrons attracted to the electron emitting port. By this, the kinetic energy of the electrons is increased, and the orbits of the electrons are shifted to the outer side farther from the atomic nucleus. Namely, an attractive force exerted on the electrons from the side of the electron emitting port is reduced.
When the energy of electrons surmounts the potential barrier on the surface of the electron emitting port, they are emitted from the electron emitting port into the electrical insulation space. However, in the present invention, the positive voltage is applied to the electron drawing electrode on such a level that the energy of electrons does not surmount the potential barrier on the surface of the electron emitting port, but the attractive force exerted on the electrons is sufficiently reduced.
Further, when a positive voltage is applied to the electron extracting electrode disposed separately from the electron drawing electrode, the electron extracting electrode applies an electrical field due to the electrons placed under the reduced attractive force by the electron drawing electrode. By this, the electrons are accelerated in the direction of the electron extracting electrode, and result in obtaining more kinetic energy. Accordingly, the electrons can easily escape from the reduced attractive force by virtue of the more kinetic energy given by the electron extracting electrode. In other words, the electrons placed under the reduced attractive force by the electron drawing electrode can easily escape from the attractive force, being extracted and emitted from the electron emitting port into the electrical field.
The electron drawing electrode is provided close to the electron emitting port to raise the energy level of the electrons attracted to the electron emitting port, decreasing the attractive force from the electron emitting port. However, the electron drawing electrode is not for causing the electrons to be emitted, so that it is possible to set the voltage applied to the electron drawing electrode low. Accordingly, setting the applied voltage low makes it possible to surely prevent charge leakage generation in the electron drawing electrode, and leakage electricity loss can be reduced to the minimum, even if the electron drawing electrode is disposed close to the electron emitting port. As long as the field-emitted electrons do not reach the electron drawing electrode, the consumed amount of positive charges applied to the electron drawing electrode is negligible in theory. Therefore, it is possible to drastically reduce the energy consumption (the applied voltage).
Further, the electron extracting electrode is for applying an electrical field to the electrons placed under the reduced attractive force and causing the electrons of the electron emitting port to be extracted and emitted into the electrical insulation space. However, orbits of the electrons having been already shifted to the outer side where a less attractive force acts by the electron drawing electrode, the electrons can be efficiently extracted and emitted, even if the applied voltage is set low. Accordingly, setting the applied voltage low makes it possible to surely prevent leakage current generation in the electron extracting electrode, and reduce the electric power loss caused by the leakage to the minimum.
The electron extracting electrode causes the electrons to be extracted and emitted sidewardly from the gap between the electron emitting port and the electron drawing electrode by applying an electrical field to the gap from the side direction.
The field-emitted electrons are received and collected by the electron collector, which is a state of electricity generation.

As can be appreciated from the foregoing description, according to the field emission electricity generating apparatus recited in claim 1 of the present invention, the electron drawing electrode and the electron extracting electrode are combined to field-emit electrons efficiently and collect the field-emitted electrons in the electron collector, while restricting the energy consumption required for the field emission small, whereby efficient electricity generation can be obtained.
Further, according to the field emission electricity generating apparatus recited in claim 1 of the present invention, compared to the conventional method where thermal energy is applied to cause thermal electrons to be emitted by the thermal energy for generating electricity, that is, compared to the conventional electricity generation in which thermal energy is converted to electrical energy, electricity can be generated with much less energy
Still further, according to the field emission electricity generating apparatus recited in claim 1 of the present invention, stable electricity supply can be achieved with easy operational control, unlike the unstable electricity generation using natural resources such as sunlight and the like.

Further, according to the field emission electricity generating apparatus recited in claim 2, in addition to the effects obtained by the structure recited in claim 1 above, the electron emitting port is made of a material and/or in a shape exhibiting a low potential barrier with respect to electron emission, to facilitate field emission from the electron emitting port.
The electrons within a solid object are bounded like the electrons within the atoms, so that the electrons are not separated from within the solid object in a normal state. The minimum energy required for causing the electrons to be emitted from within a solid object into a vacuum by an electrical field or the like is called a work function E_{W}. This work function Ew corresponds to the potential barrier possessed by the solid object with respect to electron emission.
The materials exhibiting a low potential barrier, i.e., the materials having a small work function E_{W}, include: atoms of cesium (E_{W} = 1.81 ev), calcium (E_{W} = 3.2 ev), thorium (E_{W} = 3.4 ev), molybdenum (E_{W} = 4.3 ev), and tungsten (E_{W} = 4.52 ev). Further, the compounds having a small work function E_{W} include: barium oxide (E_{W} = 1.6 ev), calcium oxide (E_{W} = 1.61 ev), and thorium oxide (E_{W} = 1.66 ev).
Further, the shapes (including crystal structures) exhibiting a low potential barrier, i.e., the shapes having a small work function Ew include: carbon nanotube (which will be described later), carbon wall, carbon nanohorn, diamond, and BN nanotube (whisker).
The materials and/or the shapes exhibiting a low potential barrier may include the electron emitting port having a surface layer formed with a laminated structure expected to exhibit the quantum tunneling phenomenon.

According to the field emission electricity generating apparatus recited in claim 3, in addition to the effects obtained by the structure recited in claim 1 above, the electron emitting port is configured with a quasi-one-dimensional material vertically planted in such a manner that the longitudinal direction of the quasi-one-dimensional material corresponds to the direction of electron emission.
The quasi-one-dimensional material refers to a material that exhibits effects substantially the same as those of a one-dimensional material in respect of electron emission. While a carbon nanotube, for example, may be used as the quasi-one-dimensional material, an electrically conductive material having undergone sufficiently fine processing (of nano-order to micron-order) may be used as well.
In the case of the quasi-one-dimensional material, the electrons migrate only in a one-dimensional direction, being field-emitted from its tip end. Matching the longitudinal direction of the quasi-one-dimensional material with the electron emission direction facilitates the field emission of electrons.
The quasi-one-dimensional material can be made up of the multiplicity of quasi-one-dimensional materials which are vertically planted on the surface of the electron emitting port. When the electron emitting port is configured with the multiplicity of quasi-one-dimensional materials, the electrons are field-emitted from each of them, and as a whole, a large number of electrons may be field-emitted efficiently.

According to the field emission electricity generating apparatus recited in claim 4, in addition to the effects obtained by the structure recited in claim 3 above, the carbon nanotube used as the quasi-one-dimensional material ensures sufficiently high (free) mobility of the electrons. Further, by forming the electron emitting port by vertically planting the carbon nanotube in such a manner that its longitudinal direction corresponds to the direction of electron emission, the efficiency in emitting electrons is achieved.

According to the field emission electricity generating apparatus recited in claim 5, in addition to the effects obtained by the structure recited in claim 1 above, the electron emitting port is made of a graphite and the graphite surface is made so as to be a surface of the electron emitting port. By this, when a positive voltage is applied to the electron drawing electrode, electrons contributing to a double bond of a carbon six-membered-ring contained in the graphite layer easily become free electrons, the kinetic energy of the free electrons is increased, and orbits of the electrons are shifted to the outer side farther from the atomic nucleus. Namely, this enables a multiplicity of electrons belonging to the six-membered-rings in the graphite to be easily present on the surface of the electron emitting port of the graphite surface with an attractive force sufficiently reduced. In other words, the application of a positive voltage makes it possible to cause a large number of electrons to be easily extracted and emitted to the electrical insulation space from the electron emitting port. On this occasion, since the voltage to be applied to the electron drawing electrode and the electron extracting electrode can be set low, the leakage electricity can be decreased and the efficiency in generating electricity is increased.

According to the field emission electricity generating apparatus recited in claim 6, in addition to the effects obtained by the structure recited in claim 1 above, the electron drawing electrode is configured with a quasi-one-dimensional material vertically planted on the surface thereof opposing to the electron emitting port in such a manner that the longitudinal direction of the quasi-one-dimensional material corresponds to the direction of electron emission, and whereby positive charges on the side of the electron drawing electrode can be concentrated on the tip of the quasi-one-dimensional material, and the strength of an electrical field between the tip thereof and the electron emitting port can be increased substantially. Because of this, the electron drawing electrode can more effectively draw the electrons within the electron emitting port to a region where a less attractive force acts with a low positive voltage. Further, in the case that a multiplicity of quasi-one-dimensional materials are provided on both the electron drawing electrode and the electron emitting port opposing to each other, a highly efficient drawing of the electrons can be conducted between the opposing multiplicity of quasi-one-dimensional materials.

According to the field emission electricity generating apparatus recited in claim 7, in addition to the effects obtained by the structure recited in claim 1 above, the electron extracting electrode is configured with a quasi-two-dimensional material allowing the electrons emitted from the electron emitting port to pass therethrough due to the quantum tunneling phenomenon and to be received by the electron collector disposed at the back thereof. Accordingly, even if the electrons emitted from the electron emitting port reach the electron extracting electrode, they are not attracted to the atomic nucleus or the like (i.e., the electrons are not absorbed) in the electron extracting electrode; they rather pass therethrough to the back to be received by the electron collector. Therefore, arranging the electron collector at the back of the electron extracting electrode ensures that the field-emitted electrons are surely received by the electron collector, without provision of a further special means for collecting the electrons. Since it is unnecessary to apply a positive voltage to the electron collector, it is possible to prevent the undesirable situation where the received electrons are not usable and the efficiency in generating electricity can be increased.
The quasi-two-dimensional material refers to a material that exhibits effects substantially the same as those of a two-dimensional material in respect of penetration of electrons. More specifically, it refers to a material that has a very thin structure and is capable of exhibiting the quantum tunneling phenomenon for the electrons. In order to increase the effect of the quantum tunneling phenomenon, it is necessary to increase the speed (kinetic energy) of the flying electrons and to decrease the probability of attracting the electrons by making the thickness of the quasi-two-dimensional material thin.

According to the field emission electricity generating apparatus recited in claim 8, in addition to the effects obtained by the structure recited in claim 1 above, an electron orbit changing means is provided for changing orbits of electrons emitted from the electron emitting port and moving towards the electron extracting electrode. Accordingly, this ensures that the electrons emitted from the electron emitting port have their flying orbits changed in the middle way before reaching the electron extracting electrode, to be collected by the electron collector. Although this apparatus additionally requires the electron orbit changing means, it is beneficial in that the electron extracting electrode does not need to be made of a special material such as a quasi-two-dimensional material. Further, the electron orbit changing means does not need to be made of a special material, as long as it can apply a positive voltage and a negative voltage.

According to the field emission electricity generating apparatus recited in claim 9, in addition to the effects obtained by the structure recited in claim 1 above, a secondary emission preventing means is provided for preventing secondary emission of the electrons having reached the electron collector. This ensures that the field-emitted electrons are surely captured and collected by the electron collector, whereby highly efficient electricity generation is achieved.

According to the field emission electricity generating apparatus recited in claim 10, in addition to the effects obtained by the structure recited in claim 1 above, the electron collector and the electron supplier are electrically connected to each other, and an electrical load is provided therebetween. This allows the electrons received by the electron collector to be supplied to the electrical load for use in working. The electrons having passed through the electrical load return to the electron collector. This enables circulation of the electrons.

### Brief Description of the Drawings

Fig. 1 is an oblique view showing the primary part of the field emission electricity generating apparatus according to a first embodiment of the present invention.
Fig. 2 is a schematic cross-sectional view showing the field emission electricity generating apparatus according to the first embodiment of the present invention.
Fig. 3 is a schematic cross-sectional view showing the primary part of the transformed example of the field emission electricity generating apparatus according to the first embodiment of the present invention.
Fig. 4 is a schematic cross-sectional view showing the primary part of the field emission electricity generating apparatus according to a second embodiment of the present invention.
Fig. 5 is an oblique view showing the primary part of the field emission electricity generating apparatus according to a third embodiment of the present invention.
Fig. 6 illustrates the relationship between a voltage V and a current I in the electron drawing electrode.
Fig. 7 is a schematic cross-sectional view of the field emission electricity generating apparatus according to a fourth embodiment of the present invention.

### Description of the Reference Characters

- 10: vacuum vessel
- 20: electron supplier
- 30: electron emitting port
- 31: quasi-one-dimensional material
- 40: electron drawing electrode
- 41: electron drawing power supply
- 42: quasi-one-dimensional material
- 50: electron extracting electrode
- 51: electron extracting power supply
- 60: electron collector
- 70: electricity removing circuit
- 71: electrical load
- 80: electrical insulator
- 90: electron orbit changing means
- 91: orbit changing electrode
- 92: orbit changing electrode
- 100: secondary emission preventing means
- 101: electrical insulation wall
- 101: gate wall
- F: electrical insulation space
- e: electron

### Best Modes for Carrying Out the Invention

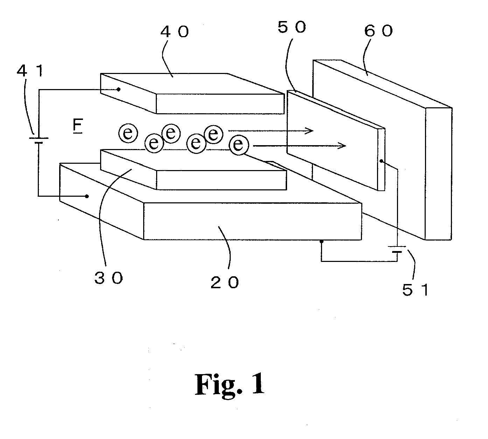

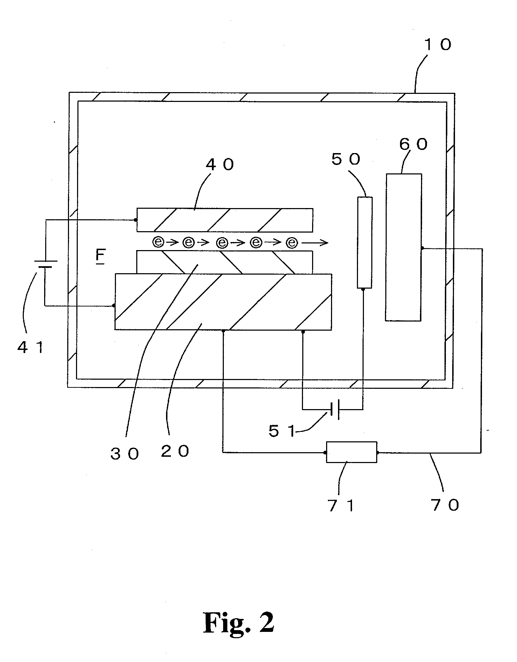

A field emission electricity generating apparatus according to a first embodiment of the present invention will be described with reference to Figs. 1 and 2.
There are provided with an electron supplier 20, an electron emitting port 30, an electron drawing electrode 40, an electron extracting electrode 50 and the electron collector 60 in a vacuum vessel 10.
Further, there are provided with an electron drawing power supply 41, an electron extracting power supply 51 and an electricity removing circuit 70 outside the vacuum vessel 10.

The vacuum vessel 10 is a vessel which has its interior maintained in a vacuum or at a sufficiently reduced pressure, with the kind of material therefor not restrictive. The interior of the vacuum vessel 10 is an electrical insulation space F.
The electron supplier 20 is made of a material serving as a source of supplying electrons, which may be a metallic or other material containing a large amount of free electrons.
The electron emitting port 30 is for field-emitting electrons therefrom, which is provided so as to be electrically conductive with the electron supplier 20.
The electron emitting port 30 is preferably made of a material exhibiting a low potential barrier with respect to field emission of electrons. Further, the tip part of the electron emitting port 30 is preferably formed in a narrow shape to make an electrical field concentrated thereon and strengthen the electrical field locally.
The electron drawing electrode 40 is for applying an electrical field to the electron emitting port 30 to raise the energy level of electrons e attracted the electron emitting port 30 and shift orbits of the electrons e to the outer ones where a less attractive force acts. The electron drawing electrode 40 is disposed opposite to the electron emitting port 30 via the electrical insulation space F.
The electron extracting electrode 50 is for applying an electrical field to the electrons placed under the attractive force of the atomic nucleus reduced by the electron drawing electrode 40 to cause them to escape from the reduced attractive force on the side of the electron emitting port 30 and to be extracted and emitted to the electrical insulation space F, that is, an electrode for causing the electrons e to be field-emitted. In the present embodiment, the electron extracting electrode 50 is configured with a quasi-two-dimensional material allowing the electrons e flying toward the electron extracting electrode 50 to pass therethrough, not to be absorbed threrein.

The electron collector 60 is for collecting the field-emitted electrons. In the present embodiment, it is provided at the back of the electron extracting electrode 50 via the electrical insulation space F. The electron collector 60 may be made of a metallic or other material having a high capability of holding free electrons.
The electron drawing power supply 41 is for applying a positive voltage to the electron drawing electrode 40. In the present embodiment, the electron drawing power supply 41 has a negative electrode connected with the electron supplier 20 and a positive electrode connected with the electron drawing electrode 40.
Similarly to the above, the electron extracting power supply 51 is for applying a positive voltage to the electron extracting electrode 50. In the present embodiment, the electron extracting power supply 51 has a negative electrode connected with the electron supplier 20 and a positive electrode connected with the electron extracting electrode 50.
The electricity removing circuit 70 is a circuit for externally removing the electrons e collected by the electron collector 60. It is provided between, and electrically connected to, the electron collector 60 and the electron supplier 20, with an electrical load 71 provided in the middle of the circuit.
In the present embodiment, the electrical insulation space F is configured with an insulation space which is maintained in a vacuum or at a sufficiently reduced pressure.

There exists a proton possessing a positive charge in an atomic nucleus of a material. Electrons e having a negative charge are flying on the orbits in the vicinity of the atomic nucleus. If energy such as thermal energy and the like is applied to the material, the kinetic energy of the electrons e is increased, and the electron e orbits are shifted to the outer side farther from the atomic nucleus than the original orbits. When the electron e orbits are shifted to the outer side farther from the atomic nucleus, the attractive force exerted on the electrons by the atomic nucleus is reduced. In this case, if a material having a positive charge exists in the outside and in the periphery of the electrons e, the probability that the electrons e are emitted to the outside is increased. The phenomenon that electrons e are emitted from the atom due to the temperature rise in a material is called thermal electron emission, and it is used for a vacuum tube and the like. However, in such a case that a material provided outside does not have a large number of positive charges, even if orbit of the electrons are shifted to the outer side due to thermal energy, the thermally emitted electrons leave positive holes in the atom. As the result of this, the remaining positive charges attract the electrons, and in most cases, the electrons return to the original orbits.
By providing an electrode in the periphery of the electrons e flying around the atomic nucleus and causing the electrode to store positive charges therein, orbits of the electrons e flying around the atomic nucleus can be shifted to the outer side. In this case, the electrode does not need to possess such a sufficient number of positive charges as cause the electrons to be completely emitted to the outside of the atomic nucleus, i.e., does not need to possess more positive charges than is necessary for shifting the electron orbits from the ordinary ones to the outer side. When the positive charges stored in another electrode are applied to the electrons e of which orbits are shifted from the ordinary ones to the outer side, the electrons e are accelerated to escape from the attractive force of the atomic nucleus, whereby they are extracted to the outside of the atom. In other words, the electrons are field-emitted. In this case, not so many positive charges are required for extracting the electrons because the electrode extracts the electrons placed under the attractive force of the atomic nucleus having been already reduced. An electron drawing electrode functions as the electrode for shifting orbits of the electrons e flying around the atomic nucleus to the outer side and decreasing the attractive force of the atomic nucleus, and an electron extracting electrode functions as the electrode for extracting electrons from the atom by acting on the electrons of which orbits having been shifted to the outer side and reducing the attractive force of the atomic nucleus. In the first embodiment mentioned above, the electron drawing electrode 40 and the electron extracting electrode 50 correspond to those electrodes respectively.

Returning to Fig. 1 and 2, the electron drawing electrode 40 is provided close to the electron emitting port 30 simply for shifting orbits of the electrons bound to the atomic nucleus of the atoms within a material constituting the electron emitting port 30 to the outer side. For this reason, a voltage applied to the electron drawing electrode 40 can be set low, and whereby charge leakage from the electron drawing electrode 40 and the power supply 41 can be decreased, and leakage electricity loss can be reduced.
Further, since the electron extracting electrode 50 acts on the electrons e placed under the attractive force of the atomic nucleus having been already reduced, it is possible to cause the electrons e confined in the electrical emitting port 30 to be extracted (emitted), even if the applied voltage is set low. Accordingly, charge leakage from the electron extracting electrode 50 and the power supply 51 can be restrained, and leakage electricity loss can be reduced.
The electron extracting electrode 50 is ordinarily provided on the side of the gap between the electron emitting port 30 and the electron drawing electrode 40, to apply an electrical field from the direction perpendicular to the electrical field applied from the electron drawing electrode 40.

In the field emission electricity generating apparatus according to the first embodiment, the electron drawing electrode 40 applies positive charges to reduce an attractive force from the electron emitting port 3, the electron extracting electrode 50 applies positive charges to increase the kinetic energy, which enables the electrons e present within the electron emitting port 30 of the electron supplier 20 arranged in the vacuum vessel 10 to escape from the attractive force, being field-emitted into the electrical insulation space F.
The electrons e field-emitted to the electrical insulation space F fly toward the electron extracting electrode 50, increasing the flying speed, and penetrate through the electron extracting electrode 50 made of a very thin quasi-two-dimensional material due to the quantum tunneling phenomenon. In other words, the field-emitted electrons reach and collide with the electron collector 60 to be absorbed therein, without being absorbed in the electron extracting electrode 50.
When the electrons e approach the electron extracting electrode 50 made of a quasi-two-dimensional material, they can penetrate the very thin material due to the tunnel phenomenon by means of the kinetic energy the electrons e have. Namely, even if the electrons e approach the atomic nucleus within the quasi-two-dimensional material, the probability that the electrons e are captured by the atomic nucleus is low because the flying electrons have speed, and the probability that the electrons e continue to fly due to the tunnel phenomenon without being absorbed in the quasi-two-dimensional material is high because the majority of the electrons e penetrate the quasi-two-dimensional material.
The quasi-two-dimensional material of the electron extracting electrode 50 can be formed by arranging carbon nanotubes.

There is provided an electricity removing circuit 70 between the electron collector 60 having absorbed the electrons e and the electron supplier 20. The electrons e are fed from the electron collector 50 back to the electron supplier 20 through the electricity removing circuit 70. When the electrons e pass through the electrical load 71, current i flows. Namely, generated electricity is supplied to the electrical load 71 as electrical energy, and is used as electrical energy.

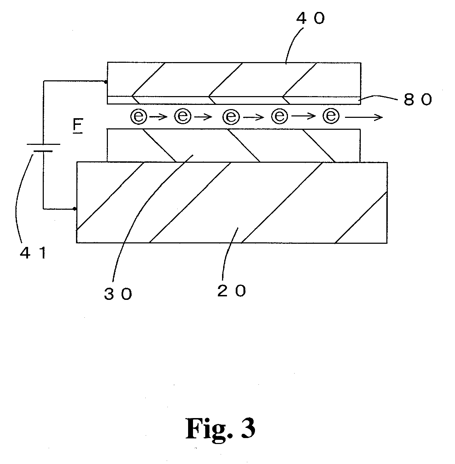

In the transformed example shown in Fig. 3, an electrical insulator 80 is provided on the surface of the electron drawing electrode 40. Accordingly, when the electrons e of the electron emitting port 30 are drawn to the electron drawing electrode 40 due to the action of Coulomb force generated by positive charges applied from the electron drawing electrode 40, the emitted electrons e are prevented from reaching the electron drawing electrode 40 by the electrical insulator 80, even if they escape from the attractive force on the side of the electron emitting port 30, being emitted to the vacuum space. Because of this, leakage electricity loss on the side of the electron drawing electrode 40 caused by the field-emitted electrons having reached the electron drawing electrode 40 can be prevented. Further, the efficiency in generating electricity can be obtained without loss of electricity by surely introducing the field-emitted electrons to the electron collector 60.
Additionally, positive charges (positive voltages) are applied to the electron drawing electrode 40 by the electron drawing power supply 41. However, as long as the electrons e on the side of the electron emitting port 30 don't reach (a current doesn't flow in) the electron drawing electrode 40, the consumption of electric power is negligible in theory.

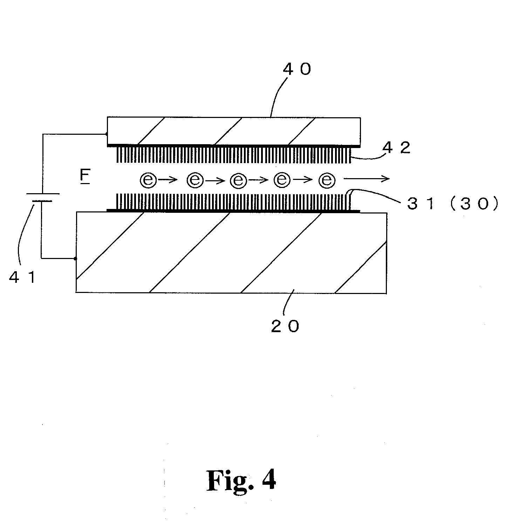

A field emission electricity generating apparatus according to a second embodiment of the present invention will be described with reference to Fig. 4.
In the field emission electricity generating apparatus, the surface of the electron emitting port 30 opposing to the electron drawing electrode 40 is configured with a quasi-one-dimensional material 31. A multiplicity of quasi-one-dimensional materials 31are vertically planted on the surface of the electron supplier 20 in such a manner that the longitudinal direction of the quasi-one-dimensional materials 31 is perpendicular to the surface of the electron supplier 20 (corresponds to the direction of electron emission). By vertically planting the quasi-one-dimensional materials 31 on the surface, negative charges on the side of the electron emitting port 30 can be concentrated on the tips thereof. As the result of this, the strength of an electrical field generated between the electron emitting port 30 and the electron drawing electrode 40 can be substantially increased, which enables the electrons e on the side of the electron emitting port 30 to be efficiently drawn to the side of the electron drawing electrode 40. In other words, the electrons can be drawn without a large electrical potential difference between the electron emitting port 30 and the electron drawing electrode 40.
In the present embodiment, similarly to the above, the surface of the electron drawing electrode 40 opposing to the electron emitting port 30 is also configured with a quasi-one-dimensional material 42. A multiplicity of quasi-one-dimensional materials 42 are vertically planted on the surface of the electron drawing electrode 40 in such a manner that the longitudinal direction of the quasi-one-dimensional materials 42 is perpendicular to the surface of the electron drawing electrode 40. By vertically planting the quasi-one-dimensional materials 42 on the surface, positive charges on the side of the electron drawing electrode40 can be concentrated on the tips thereof. As the result of this, the strength of an electrical field generated between the electron emitting port 30 and the electron drawing electrode 40 can be substantially increased. Because of this, the electrical field can efficiently act on the side of the electron emitting port 30 to reduce the attractive force, allowing the electrons e on the side of the electron emitting port 30 to be efficiently drawn to the electron drawing electrode 40.

The configuration of vertically planting the quasi-two-dimensional materials 42, 31 on both surfaces of the electron emitting port 30 and the electron drawing electrode 40 opposing to each other enables positive charges and negative charges to be sufficiently concentrated on the tips of both quasi-one-dimensional materials 31, 42. Thus, even a small applied voltage can produce a sufficiently high electrical field act. As the result of this, the electrons e on the side of the electron emitting port 30 can be efficiently drawn to the side of the electron drawing electrode 40 (the confining force of the electron emitting port 30 can be reduced).
A carbon nanotube can be used as the quasi-one-dimensional materials 31,42.
The carbon nanotube is composed, e.g., of six-membered rings of carbon bonded together. The tip end of the carbon nanotube is in a state allowing the electrons e to be easily emitted because of the low restraining force with respect to electron emission.
A multiplicity of carbon nanotubes can be formed by layering a catalytic material such as iron, cobalt or nickel on the surfaces of the electron emitting port 30 and the electron drawing electrode 40, setting the atmosphere at a temperature around 650 degrees Centigrade, supplying a carbonaceous gas such as methane or acetylene as appropriate to maintain proper conditions, and growing crystals on the surface thereof.

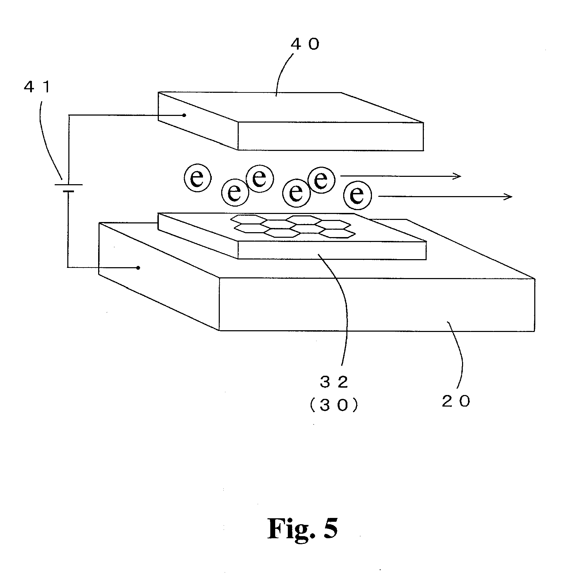

A field emission electricity generating apparatus according to a third embodiment of the present invention will be described with reference to Fig. 5.
In the present embodiment, a graphite 32 having a carbon six-membered-ring structure within the plane layer is used as the electron emitting port 30. The layer surface of the graphite 32 is arranged so as to be the surface of the electron emitting port 30 opposing to the electron drawing electrode 40. The other structures except this are the same as in the first embodiment illustrated in Figs. 1 and 2.

As for carbon atoms, a carbon atom bonds to other four atoms to be stable. In a graphite made by bonding six-membered rings, one of the carbon atoms constituting a six-membered ring bonds to other three carbon atoms, and thus, one of the three connections becomes a double bond. Accordingly, there is a high probability that the electrons contributing to the double bond become free electrons. For this reason, there exist electrons as a carrier and holes in the graphite, and further there exist 10¹⁹ / cm³ carrier electrons and the same number of carrier holes in the graphite. The electrons having become a free electron migrate almost two-dimensionally along the inside of the graphite layer as a conductive electron, and rarely migrate to the different layers. Therefore, when an electrical field is applied to the layer perpendicularly, the probability that the electrons contributing to the double bond become a carrier electron is increased.

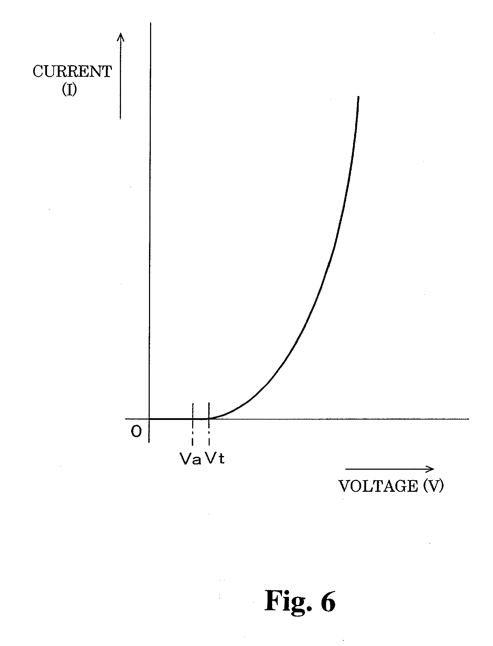

The relationship between the electron emitting port 30 made of the graphite 32 and the electron drawing electrode 40 will be is described (without considering the electron extracting electrode 50) with reference to Fig. 6. If a positive voltage is continuously applied to the electron drawing electrode 40, gradually increasing the voltage from zero, a current starts to flow at the time when the voltage exceeds the voltage Vt. This voltage Vt is called a threshold voltage. In the present invention including the first embodiment mentioned above, the voltage of the electron drawing electrode 40 is set to be a voltage Va, more than zero volt and less than the threshold voltage. When the voltage Va is set like this, a current flowing from the electron drawing power supply is almost zero, and the electrons within the electron emitting port 30 are drawn to the side of the electron drawing electrode 40 due to an electrical field effect of Va. In other words, the attractive force from the electron emitting port 30 is reduced. In the second embodiment, the electrons contributing to a double bond of six-membered-ring of carbon atoms within the graphite 32 (30) become a carrier electron, being drawn to the electron drawing electrode 40.

In such a state that electrons within the graphite 32 (the electron emitting port 30) become a carrier electron and are drawn to the electron drawing electrode 40 (an attractive force from the side of the graphite 32 is reduced), if positive charges are applied to the electron extracting electrode 50, an electrical field applied from the electron extracting electrode 50 accelerates the electrons e in the direction of electron extracting electrode 50. By this, the electrons e having the kinetic energy in the direction of the electron extracting electrode 50 overcome the reduced attractive force from the graphite 32, being emitted into the outer world.
The electrons e emitted into a vacuum, overcoming the attractive force from the graphite 32 (electron emitting port 30), as shown in Figs. 1 and 2, fly toward the electron extracting electrode 50, passing through the electron extracting electrode 50 made of a quasi-two-dimensional material due to the quantum tunneling phenomenon, and reach the electron collector 60. Storing the electrons e in the electron collector 60 is generating electricity. The stored electrons e flow into an electrical load 71 through the electricity removing circuit 70, and are used for electrical energy.

In the field emission electricity generating apparatus of the present invention, combining the electron drawing electrode 40 and the electron extracting electrode 50 makes it possible to easily facilitate field-emission of the electrons without setting the voltage applied to each of the electrodes 40, 50 high. Because of this, the electric non-conductance in each of the electrodes 40, 50 can be easily maintained, and thus, it is possible to sufficiently decrease a leakage voltage and reduce energy loss. Hence, the efficiency in generating electricity can be obtained.

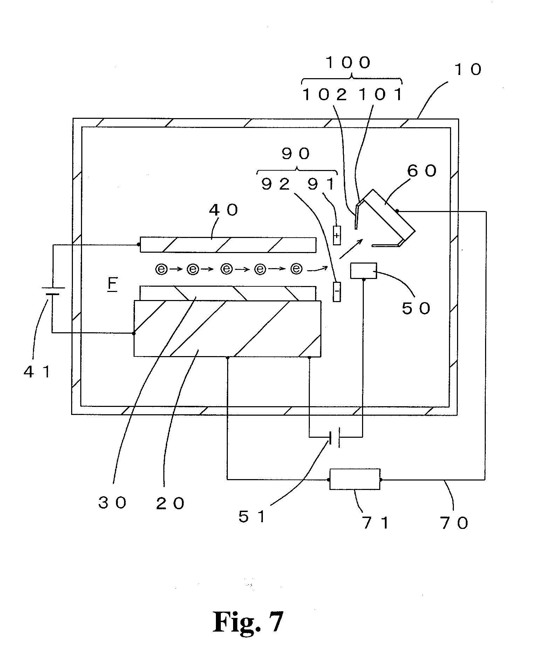

A field emission electricity generating apparatus according to a forth embodiment of the present invention will be described with reference to Fig. 7.
In the present embodiment, there is provided with an electron orbit changing means 90 for changing orbits of the filed-emitted electrons e flying towards the electron extracting electrode 50 in the middle way. Further, there is provided with a secondary emission preventing means 100 for preventing secondary emission of the electrons that have reached the electron collector.
Similarly to the first through the third embodiments mentioned above, there are provided with an electron supplier 20, an electron emitting port 30, an electron drawing electrode 40, an electron extracting electrode 50 and the electron collector 60 in a vacuum vessel 10. Further, there are provided with an electron drawing power supply 41, an electron extracting power supply 51 and an electricity removing circuit 70 outside the vacuum vessel 10.

The electron orbit changing means 90 changes the orbits of the filed-emitted electrons e that are in the middle of flying towards the electron extracting electrode 50. By this, the electrons can be prevented from colliding with the electron extracting electrode 50, and reach the electron collector 60.
In the electron orbit changing means 90 shown in Fig. 7, a pair of positive and negative orbit changing electrodes 91, 92 is provided in front of the electron extracting electrode 50. The orbits of the electrons flying towards the electron extracting electrode 50 are changed to the ones deviated from the electron extracting electrode 50 by the pair of orbit changing electrodes 91, 92 before their reaching the electron extracting electrode 50, and thus, the electrons can reach the electron collector 60 provided separately.
Since the electron orbit changing means 90 enables the electrons e to reach the electron collector 60 without reaching the electron extracting electrode 50, it is not necessary that the electron extracting electrode 50 should be made of a quasi-two-dimensional material expected to exhibit the quantum tunneling phenomenon. Hence, the structural freedom of the electron extracting electrode 50 is increased and the cost thereof is reduced.
Additionally, in the electron orbit changing means 90 mentioned above, there is provided with a pair of positive and negative orbit changing electrodes 91, 92. However, it is possible to solely use either of the positive or the negative orbit changing electrode for the electron orbit changing means 90. Further, whatever capable of changing the orbits of the electrons that are in the middle way of flying from the direction of the electron extracting electrode 50 to the direction of the electron collector 60 can be used for the electron orbit changing means 90, without being restricted to electrodes.

The secondary emission preventing means 100 is provided for preventing secondary emission of the electrons having reached the electron collector 60, that is, for preventing such a state that no electrons have reached the electron collector 60. Namely, the secondary emission preventing means 100 prevents the electrons having reached the electron collector 60 from being emitted secondarily and dispersed.
In the secondary emission preventing means 100 shown in Fig. 7, an electrically insulating surrounding wall 101 made of an electrically insulating member is provided so as to surround the periphery of a front surface of the electron collector 60, i.e., the surface receiving the flying electrons e, and a gate wall 102 is arranged in periphery of the electrically insulating surrounding wall 101. In the gate wall 102, the vicinity of the orbits of the electrons e flying toward the electron collector 60 is only opened to receive the electrons e, and the other parts except the opening for the electrons are closed. A negative voltage is slightly applied to the gate wall 102. By the negative potential of the gate wall 102, the electrons having reached the electron collector 60 can be speedily returned to the electron collector 60 without being dispersed, even if the electrons are secondarily emitted therefrom.
In the present embodiment, the secondary emission preventing means 100 is made up of the electrically insulating surrounding wall 101 and the gate wall 102. However, the structure of the secondary emission preventing means 100 is not restricted to this, and all structures capable of preventing the electrons from being emitted secondarily from the electron collector 60 are included.

### Industrial Applicability

The apparatus of the present invention utilizing field emission of electrons can be used as an electricity generating means in place of, or in addition to, the conventional electricity generations such as thermal electricity generation, hydroelectricity generation, nuclear electricity generation, and electricity generation using natural energy of sunlight and the like. The apparatus is able to drastically reduce external energy input, and supply stable electrical energy at low cost, while paying due consideration to the environment, and accordingly, it is highly applicable in the industrial field.

## Claims

1. A field emission electricity generating apparatus comprising:
an electron supplier made of a material possessing free electrons;
an electron emitting port provided electrically conductive with the electron supplier;
an electron drawing electrode provided opposite to the electron emitting port via an electrical insulation space, for applying an electrical field to raise the energy level of the electrons attracted to the side of the electron emitting port and shift their orbits to the outer side where a less attractive force acts;
an electron extracting electrode provided separately from the electron drawing electrode, for applying an electrical field to the electrons placed under the reduced attractive force by the electron drawing electrode to cause them to be extracted and emitted into the electrical insulation space; and
an electron collector for collecting the electrons emitted by the electron extracting electrode;
wherein a positive voltage is applied to the electron drawing electrode and the electron extracting electrode to cause the electrons to be field-emitted from the electron emitting port, and the field-emitted electrons are received and collected by the electron collector.

2. The field emission electricity generating apparatus according to claim 1, wherein the electron emitting port is made of a material and/or in a shape exhibiting a low potential barrier with respect to electron emission.

3. The field emission electricity generating apparatus according to claim 1, wherein the electron emitting port is formed by vertically planting a quasi-one-dimensional material on the surface of the electron supplier in such a manner that the longitudinal direction of the quasi-one-dimensional material corresponds to the direction of electron emission.

4. The field emission electricity generating apparatus according to claim 3, wherein the quasi-one-dimensional material is a carbon nanotube.

5. The field emission electricity generating apparatus according to claim 1, wherein the electron emitting port is made of a graphite, and the graphite surface is made so as to be a surface of the electron emitting port.

6. The field emission electricity generating apparatus according to claim 1, wherein the electron drawing electrode is configured by vertically planting a quasi-one-dimensional material on the surface thereof opposing to the electron emitting port in such a manner that the longitudinal direction of the quasi-one-dimensional material corresponds to the direction of electron emission.

7. The field emission electricity generating apparatus according to claim 1, wherein the electron extracting electrode is made of a quasi-two-dimensional material allowing the electrons emitted from the electron emitting port to pass therethrough due to the quantum tunneling phenomenon, and to be received by the electron collector provided at the back thereof.

8. The field emission electricity generating apparatus according to claim 1, wherein an electron orbit changing means is provided for changing orbits of the electrons emitted from the electron emitting port and moving towards the electron extracting electrode.

9. The field emission electricity generating apparatus according to claim 1, a secondary emission preventing means is provided for preventing the electrons having reached the electron collector from being emitted secondarily.

10. The field emission electricity generating apparatus according to claim 1, wherein the electron collector is electrically connected to an electrical load, and the electron supplier is electrically connected to the electrical load.
